# EUROPÄISCHE PATENTSCHRIFT

(11) **EP 2 859 536 B1**
(45) Veröffentlichungstag und Bekanntmachung des Hinweises auf die Patenterteilung: **03.08.2022**
(21) Anmeldenummer: 13727616.8
(22) Anmeldetag: 07.06.2013
(51) Int. Cl.: H04L 9/32, G07C 9/00

(54) **VERFAHREN ZUM KRYPTOGRAPHISCH GESICHERTEN BEWEIS DER ANWESENHEIT EINES IDENTITY-TOKENS IM BEREICH EINES IDENTITY-SENSORS SOWIE IDENTITY-SENSOR FÜR EIN SOLCHES VERFAHREN**
METHOD FOR PROVING THE PRESENCE OF AN IDENTITY TOKEN IN THE RANGE OF AN IDENTITY SENSOR IN A CRYPTOGRAPHICALLY SECURE MANNER, AND IDENTITY SENSOR FOR SUCH A METHOD
PROCÉDÉ DE PREUVE SÉCURISÉE PAR CRYPTOGRAPHIE DE LA PRÉSENCE D'UN JETON D'IDENTITÉ DANS LA ZONE D'UN CAPTEUR D'IDENTITÉ, AINSI QUE CAPTEUR D'IDENTITÉ POUR UN TEL PROCÉDÉ

(30) Priorität: 08.06.2012 DE 102012104955
(43) Veröffentlichungstag der Anmeldung: 15.04.2015
(73) Patentinhaber: KIWI.KI GmbH, 10557 Berlin (DE)
(72) Erfinder: MERIAC, Milosch, CB1 3EX Cambridge (GB); MERIAC, Brita, CB1 3EX Cambridge (GB)
(74) Vertreter: Buchenau, Thomas
(86) Internationale Anmeldenummer: PCT/EP2013/061858
(87) Internationale Veröffentlichungsnummer: WO 2013/182705

(56) Entgegenhaltungen:
- EP-A2- 0 098 437
- WO-A1-2009/144534
- WO-A1-2009/147545
- US-A- 5 471 404
- PIRAMUTHU S: "Lightweight Cryptographic Authentication in Passive RFID-Tagged Systems", IEEE TRANSACTIONS ON SYSTEMS, MAN, AND CYBERNETICS: PART C:APPLICATIONS AND REVIEWS, IEEE SERVICE CENTER, PISCATAWAY, NJ, US, Bd. 38, Nr. 3, 3. Mai 2008 (2008-05-03), Seiten 360-376, XP011345976, ISSN: 1094-6977, DOI: 10.1109/TSMCC.2007.913918

## Beschreibung

Die Erfindung betrifft ein Verfahren zum kryptographisch gesicherten Beweis der Anwesenheit eines Identity-Tokens im Bereich eines Identity-Sensors sowie einen Identity-Sensor, insbesondere für ein solches Verfahren.

Aus DE 44 40 855 C2, DE 10 2005 032 379 A1, DE 10 2006 020 422 A1, DE 10 2009 005 221 A1, DE 10 2010 010 892 U1, EP 1 454 807, EP 2 079 058 A2, EP 2 189 598 A1 und WO 2007/087471 A2 sind verschiedene drahtlose Zugangskontrollsysteme, Verfahren zum Betrieb derartiger Systeme sowie einzelne Elemente solcher Systeme, wie z.B. elektronische Schlüssel, bekannt.

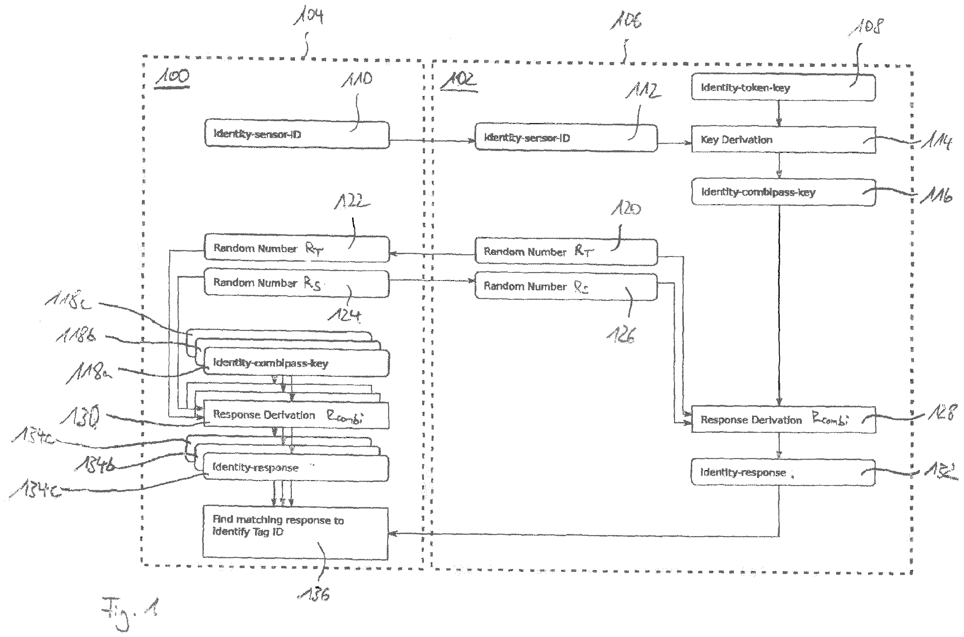

Weitere Informationen zum vorstehend genannten technischen Gebiet sind der Veröffentlichung "Yet Another Secure Distance-Bounding Protocol" zu entnehmen, abrufbar im Internet unter http://eprint.iacr.org/2008/319.pdf. In Abschnitt 2 ("Related Work") dieser Veröffentlichung wird unter Bezugnahme auf Figur 1 ein theoretisches Verfahrensmodell beschrieben, welches den bitweisen Austausch zweier Zufallszahlen umfasst. Das Verfahren geht zurück auf eine Veröffentlichung aus dem Jahr 1993 (vgl. Fußnote Nr. 3 zu der genannten Veröffentlichung). Eine praktische Umsetzung des Verfahrens ist nicht bekannt.

Die Patentanmeldung WO2009/144534 offenbart ein Verfahren zur Authentifizierungsverfahren zwischen einem Lesegerät und einem Transponder.

S. Piramuthu, "Lightweight Cryptographic Authentication in Passive RFID-Tagged Systems" offenbart ein ressourcensparendes Authentifizierungsverfahren für RFID-Tokens.

Der Erfindung liegt die Aufgabe zugrunde, ein Verfahren zum kryptographisch gesicherten Beweis der Anwesenheit eines Identity-Tokens im Bereich eines Identity-Sensors sowie einen Identity-Sensor für ein solches Verfahren vorzuschlagen, die eine hohe Sicherheit vor Missbrauch gewährleisten, die eine hohe Flexibilität aufweisen und die kostengünstig realisierbar sind.

Die Lösung der Aufgabe erfolgt erfindungsgemäß mit den Merkmalen der Ansprüche 1, 10 bzw. 14.

Ein erfindungsgemäßes Verfahren zum kryptographisch gesicherten Beweis der Anwesenheit eines Identity-Tokens im Bereich eines Identity-Sensors umfasst den Austausch mindestens einer Zufallszahl R_{T} eines Identity-Tokens mit einer Zufallszahl R_{S} eines Identity-Sensors sowie folgende Verfahrensschritte:
a) der Identity-Sensor generiert mindestens eine Zufallszahl R_{S} und lädt diese auf Vorrat als Bestätigungspaket für eine in Zukunft eingehende zweite Zufallszahl R_{T} von einem Identity-Token in eine Funkschnittstelle hoch,
b) das Identity-Token generiert eine Zufallszahl R_{T} und sendet diese an den Identity-Sensor, und
c) der Identity-Sensor quittiert den Empfang der Zufallszahl R_{T} von dem Identity-Token durch unmittelbares Rücksenden der Zufallszahl R_{S} in Form eines einzigen Datenpakets.

Unter einer Funkschnittstelle werden insbesondere ein Funkchip, ein Funkmodul oder Funk-Interface, z.B. innerhalb eines Chips, verstanden. Zufallszahlen sollen insbesondere NONCE-Zufallszahlen sein, bei denen es sich auch um Pseudo-Zufallszahlen handeln kann. Als Generierung von Zufallszahlen wird beispielsweise auch die Erzeugung eines Stroms von pseudozufälligen Nummern auf Basis eines Geheimnisses verstanden, die für den Identity-Sensor oder für ein Identity-Token (ähnlich wie eine TAN-Liste) abrufbar gespeichert ist. Wichtig ist dabei, dass kein nachvollziehbarer Zusammenhang zwischen den einzelnen Elementen dieser Liste besteht. Durch die Verwendung und den Austausch von NONCE-Zufallszahlen wird sichergestellt, dass die Kombination von R_{S} und R_{T} immer einzigartig ist und ein Tracking eines Identity-Tokens durch einen Angreifer, der einen Identity-Sensor durch Aussenden einer immer gleich bleibenden Zufallszahl R_{S} simuliert, keinen Erfolg haben kann.

Das erfindungsgemäße Verfahren hat den Vorteil, dass die Zufallszahlen R_{S} und R_{T} innerhalb sehr kurzer Zeit ausgetauscht werden, da die Zufallszahl R_{S} in Form eines einzigen Datenpakets unmittelbar übermittelt und die Übermittlung bereits vor Erhalt einer Zufallszahl R_{T} durch entsprechendes Hochladen in eine Funkschnittstelle vorbereitet wird. Die Zufallszahl R_{T} muss daher nach Erhalt der Zufallszahl R_{S} nicht erst generiert und hochgeladen, sondern kann direkt und ohne zusätzliche Zeitverzögerung "quittiert" werden. Dadurch kann eine hohe Sicherheit des erfindungsgemäßen Verfahrens gewährleistet werden. Sogenannte "Man-in-the-middle-Angriffe" können durch die Vorgabe enger Zeitgrenzen wirksam verhindert werden.

Die Wartezeit eines Identity-Tokens auf eine (Antwort-)Zufallszahl R_{S} ist bevorzugt auf 300 Mikrosekunden (µs), weiter bevorzugt auf 250 µs und besonders bevorzugt auf 1 µs begrenzt, d.h. das Identity-Token soll eingehende Zufallszahlen R_{S} nur dann berücksichtigen, wenn die Übermittlung der Zufallszahl R_{S} innerhalb der oben genannten Zeit(en) für das Identity-Token erkennbar begonnen hat. In einer weiter bevorzugten Ausführungsform berücksichtigt das Identity-Token eingehende Zufallszahlen R_{S} nur dann, wenn die Übermittlung der Zufallszahl R_{S} innerhalb der oben genannten Zeit(en) bzw. des vorgegebenen Zeitfensters für das Identity-Token bereits abgeschlossen ist. Dies verhindert "Man-in-the-Middle-Angriffe" über gängige Funknetzwerkstrukturen, da übliche Latenzzeiten in diesem aufgrund komplexer Protokolle in der Regel höher sind. Ein weiterer Vorteil der vorstehend beschriebenen Ausführungsform liegt darin, dass "Man-in-the-Middle-Angriffe" sehr einfach und kostengünstig durch Verwendung eines einzelnen, vorgegebenen Zeitfensters verhindert werden. Nur Zufallszahlen R_{S}, deren Übermittlung innerhalb des Zeitfensters beginnen bzw. die bereits vollständig übermittelt wurden, werden berücksichtigt, alle anderen Zufallszahlen werden verworfen.

Das erfindungsgemäße Verfahren ermöglicht es, dass die Berücksichtigung von Zufallszahlen R_{S} durch das Identity-Token unabhängig von einer Zeitmessung durch Beschränkung auf ein festes Zeitfenster erfolgen kann, insbesondere unabhängig von einer aus dem Stand der Technik bekannten aktiven und individuellen Zeitmessung. Der Stromverbrauch des erfindungsgemäßen Verfahrens kann damit signifikant reduziert werden, da die technische Realisierung eines festen Zeitfensters technisch wesentlich einfacher realisierbar ist als die Messung einer Antwortzeit.

Obwohl sich Funkwellen innerhalb von 250 µs ca. 75 Kilometer weit ausbreiten, ist die kurze Latenz ein wirkungsvolles Hindernis für Angreifer, da die technische Komplexität der Weiterleitung der Daten über ein weitreichendes Protokoll eine sehr hohe technische Hürde darstellt, hohe Kosten verursacht und deshalb unpraktikabel ist. Bei einer maximalen Wartezeit von einer Mikrosekunde wird eine räumliche Beschränkung auf etwa 300 Meter erzielt.

Vorzugsweise wird auch die Zufallszahl R_{T} in Form eines einzigen Datenpaktes übermittelt, was die insgesamt benötigte Zeit für den Austausch der Zufallszahlen R_{S} und R_{T} weiter reduziert.

Die Zufallszahlen R_{S} und R_{T} können ohne Verschlüsselung und/oder Signatur ausgetauscht werden, so dass die Austauschzeit sich ungefähr auf die benötigte Zeit für die physikalische Übertragung beschränken lässt.

Das erfindungsgemäße Verfahren wird vorzugsweise mit Hilfe eines Identity-Sensors realisiert, der zum wiederholbaren Übertragen mindestens einer dem Identity-Sensor eindeutig zugeordneten Identity-Sensor-ID an eine Vielzahl von Identity-Token ausgebildet ist und ferner eine Funkschnittstelle zum Empfang von durch Identity-Token generierten Zufallszahlen R_{T} umfasst. Unter einer ID wird im Rahmen der vorliegenden Anmeldung eine Kennung oder eine Kombination von ein oder mehreren Merkmalen, z.B. Nummern oder Schlüsseln, verstanden, die innerhalb ihres Wirkbereichs eindeutig ist. IDs werden vorzugsweise bereits bei der Herstellung des jeweiligen Elements vergeben. Der erfindungsgemäße Identity-Sensor umfasst eine Vorrichtung zur Datenflusssteuerung, die es ermöglicht, mindestens eine dem Identity-Sensor zugeordnete Zufallszahl R_{S} in eine Funkschnittstelle hochzuladen, um diese unmittelbar auf den Empfang einer Zufallszahl R_{T} von einem Identity-Token in Form eines einzigen Datenpakets zu quittieren. Eine Vorrichtung zur Datenflusssteuerung ermöglicht es, mit anderen Worten ausgedrückt, eingehende Datenpakete automatisiert zu bestätigen und dabei zuvor abgelegte bzw. in eine Funkschnittstelle hochgeladene Informationen der Bestätigung "beizufügen". Derartige Vorrichtungen sind nur aus anderen technischen Gebieten und für andere Einsatzzwecke bekannt. Beispielsweise kommen solche Vorrichtungen bei batteriebetriebenen Drahtlosgeräten (z.B. Funk-Tastaturen) zum Einsatz, die mit meist netzstromversorgten Basisstationen kommunizieren. Bei derartigen Vorrichtungen "wacht" das Drahtlosgerät in regelmäßigen Abständen "auf", sendet ein Datenpaket an die Basisstation, und diese sendet im Falle von abgelegten bzw. hochgeladenen Daten dieselben an das Drahtlosgerät zurück. Das Drahtlosgerät muss aus diesem Grund nur für sehr kurze Zeit nach dem Absenden des Datenpakets empfangsbereit sein und kann dadurch sehr energieeffizient arbeiten (geringer Batterieverbrauch). Auch eine Synchronisierung zwischen dem Drahtlosgerät und Basisstation ist in diesem Fall nicht erforderlich. Durch eine Übertragung und wie in den Ansprüchen beschriebene Anwendung und Konfigurierung der vorstehend beschriebenen Technik auf einen erfindungsgemäßen Identity-Sensor lässt sich ein solcher kostengünstig herstellen und energieeffizient betreiben, insbesondere auch unter Verwendung bereits bekannter technischer Elemente. Hierauf wird im Zusammenhang mit dem Ausführungsbeispiel noch im Detail eingegangen.

Als Funkschnittstelle kommen bevorzugt solche zum Einsatz, die mit einer Frequenz von mindestens 2,4 GHz betrieben werden und weiter bevorzugt solche, die Datenübertragungsraten von mindestens 2 Mbit/s ermöglichen. So lassen sich die Kommunikationszyklen sehr kurz halten, wodurch das Risiko für "Man-in-the-middle-Angriffe" reduziert wird. Das Senden mit Frequenzen von 2,4 GHz oder höher hat den weiteren Vorteil, dass die Durchdringung von Objekten (wie z.B. Häusern etc.) schwieriger und energieaufwändiger ist und dies den räumlichen "Angriffsbereich" eines erfindungsgemäßen Systems in den meisten Fällen beschränkt.

In einer praktischen Ausführungsform des erfindungsgemäßen Verfahrens ermitteln sowohl der Identity-Sensor als auch das Identity-Token auf der Grundlage eines Identity-Combipass-Keys sowie der ausgetauschten Zufallszahlen R_{S} und R_{T} unabhängig voneinander jeweils eine Identity-Response, die miteinander verglichen werden, um eine Berechtigung zu überprüfen. Der Identity-Combipass-Key kann dabei beispielsweise sowohl in dem Identity-Token als auch in dem Identity-Sensor gespeichert sein, so dass für die Ermittlung einer Identity-Response lediglich der oben beschriebene Austausch der Zufallszahlen erfolgen muss.

Seitens des Identity-Tokens wird der Identity-Combipass-Key vorzugsweise aus einer dem Identity-Sensor eindeutig zugeordneten Identity-Sensor-ID und einem dem Identity-Token zugeordneten und in diesem gespeicherten Identity-Token-Key durch einen Transformationsprozess (z.B. per Verschlüsselung oder per kryptographischer Signierung) abgeleitet. Dazu überträgt der Identity-Sensor eine dem Identity-Sensor eindeutig zugeordnete Identity-Sensor-ID an das Identity-Token, so dass dieses zusammen mit einem in dem Identity-Token gespeicherten Identity-Token-Key durch einen Transformationsprozess den Identity-Combipass-Key bilden kann. Dies hat den Vorteil, dass der im Identity-Token gespeicherte Identity-Token-Key selbst weder übertragen noch in nachvollziehbarer Art und Weise verwendet werden muss. Der Identity-Combipass-Key ist daher für Dritte, die die zwischen dem Identity-Sensor und dem Identity-Token übertragenen Informationen abhören, nicht ermittelbar.

In einer weiteren praktischen Ausführungsform werden dem Identity-Sensor eine Vielzahl von entsprechenden Identity-Token zugeordneten Identity-Combipass-Keys zur Verfügung gestellt (insbesondere je ein Identity-Combipass-Key zu jedem Identity-Token, das eine Berechtigung zur Kommunikation mit dem entsprechenden Identity-Sensor haben soll). Der Identity-Sensor ermittelt gemäß dieser Ausführungsform so lange jeweils eine Identity-Response für zur Verfügung stehende Identity-Combipass-Keys unter Berücksichtigung der Zufallszahlen R_{S} und R_{T}, bis eine ermittelte Identity-Response mit der von dem Identity-Token ermittelten Identity-Response übereinstimmt oder bis alle zur Verfügung stehenden Identity-Combipass-Keys verwendet wurden. Wird eine übereinstimmende Identity-Response ermittelt, wird das Verfahren beendet und eine Berechtigung erteilt. Wird keine übereinstimmende Identity-Response ermittelt, ist das Verfahren beendet, und es wird keine Berechtigung erteilt.

Da seitens eines Identity-Sensors üblicherweise eine Netzstromversorgung vorliegt (im Gegensatz zu den Identity-Tokens, die üblicherweise über eine Batterie mit Strom versorgt werden) und die Rechenleistung dementsprechend häufig höher ist als die Rechenleistung der Identity-Tokens (die zugunsten eines geringen Stromverbrauchs und einer langen Dauerbereitschaft geringer gewählt wird), kann das Verfahren weiter verbessert werden, wenn mit Hilfe des Identity-Sensors unmittelbar nach Kenntnis der beiden Zufallszahlen R_{S} und R_{T} sämtliche Identity-Responses für alle dem Identity-Sensor zur Verfügung stehenden Identity-Combipass-Keys ermittelt und diese in einer Vergleichstabelle zwischengespeichert werden. In diesem Fall kann nach Berechnung der Identity-Response seitens des Identity-Tokens durch einen einfachen Vergleich der ermittelten Identity-Response mit den Werten der Vergleichstabelle eine Überprüfung der Identity-Responses erfolgen und die Zeit der Überprüfung weiter verkürzt werden.

Wenn die Zeit für die Berechnung aller Identity-Responses seitens des Identity-Sensors größer ist als die Zeit, die ein Identity-Token für die Berechnung der Identity-Response benötigt (z.B. weil die Zahl der einem Identity-Sensor zugeordneten Identity-Combipass-Keys sehr hoch ist), kann es vorteilhaft sein, die Identity-Combipass-Keys nach Nutzungshäufigkeit oder nach einer anderen Prioritätsrangfolge zu speichern. So kann vorgegeben werden, bei welchen Identity-Token ein erfindungsgemäßes System besonders schnell reagiert.

Alternativ kann die Zeit vom Austausch der Zufallszahlen R_{S} und R_{T} bis zur Entscheidung über eine Berechtigung (Freigabe oder Ablehnung) innerhalb eines vorgegebenen Zeitfensters bewusst zufällig gewählt werden, um zu verhindern, dass durch die Überwachung der Antwortzeiten Rückschlüsse auf die Identität bestimmter Identity-Token gezogen werden können. Diese Option ist nicht erforderlich, wenn sichergestellt ist, dass die Antwortzeit unabhängig von der Zahl der von einem Identity-Sensor verwalteten Identity-Combipass-Keys stets gleich lang ist (beispielsweise weil die Rechenzeit seitens des Identity-Sensors auch bei einer sehr großen Zahl zu verwaltender Identity-Combipass-Keys sehr viel geringer ist als die Rechenzeit seitens des Identity-Tokens).

Die Identity-Combipass-Keys werden seitens des Identity-Sensors vorzugsweise nicht direkt in diesem gespeichert, um zu vermeiden, dass diese zusammen dem Identity-Sensor "entwendet" und ausgelesen werden können. Es ist daher bevorzugt, wenn die Identity-Combipass-Keys mit einem Datenspeicher verknüpft und aus diesem Datenspeicher abrufbar sind. Ein solcher Datenspeicher kann beispielsweise in einem mit einem Identity-Sensor verbundenen Gateway oder in einer mit dem Identity-Sensor verbundenen Infrastruktur angeordnet sein. Solche Elemente können an einem vom Identity-Sensor entfernten und insbesondere abgesicherten und geheimen Ort positioniert sein.

Unter Gateways werden in diesem Zusammenhang insbesondere Vorrichtungen verstanden, die mit mehreren Identity-Sensoren verbunden sind und eine Verbindung zu einem Netzwerk herstellen, beispielsweise zu einem Mobilfunknetz, einem lokalen Netzwerk oder mit dem Internet. Durch die Verwendung von Gateways können die Betriebskosten des erfindungsgemäßen Verfahrens gesenkt werden, insbesondere wenn sehr viele Identity-Sensoren Bestandteil eines Systems sind und die Kosten für die direkte Anbindung jedes Identity-Sensors höher sind als die Kosten für die Anbindung eines Identity-Sensors an ein Gateway. Vorzugsweise befinden sich mindestens zwei Gateways im Empfangsbereich jedes Identity-Sensors, um die Ausfallsicherheit des Systems zu erhöhen.

Unter einer Infrastruktur wird insbesondere ein Server oder ein Serververbund verstanden, der als zentrales Element eines Systems aus einer Vielzahl von Identity-Sensoren Rechenleistung und Datenspeicher an einem beliebigen, in der Regel von den Identity-Sensoren entfernten Ort zur Verfügung stellt.

In einer weiteren praktischen Ausführungsform des erfindungsgemäßen Verfahrens wird von dem Identity-Token eine Identity-Token-ID an den Identity-Sensor übertragen und der dem Identity-Token zugeordnete Identity-Combipass-Key von dem Identity-Sensor auf Grundlage der Identity-Token-ID ermittelt. Dies hat den Vorteil, dass seitens des Identity-Sensors nur eine Identity-Response ermittelt werden muss. Die Zeit zur Durchführung des Verfahrens wird damit weiter reduziert.

Anstelle der Identity-Token-ID als Synonym für die Identity-Token-ID kann auch eine zufällige Transaktionsnummer (TAN) übertragen und der Identity-Combipass-Key von dem Identity-Sensor auf Grundlage dieser zufälligen Transaktionsnummer (TAN) ermittelt werden. In diesem Fall muss der Identity-Sensor Zugriff auf eine Tabelle haben, in welcher jeder Transaktionsnummer eine Identity-Token-ID zugeordnet ist. Die Verwendung von Transaktionsnummern hat den Vorteil, dass die Identity-Token-ID selbst nicht übertragen werden muss und dadurch "Mithörer" keine Kenntnis von der Identity-Token-ID erlangen können. Eine solche Tabelle kann wiederum entweder direkt in dem Identity-Sensor oder in einem mit dem Identity-Sensor verbundenen Gateway oder der Infrastruktur gespeichert sein. Auf die bereits beschriebenen jeweiligen Vorteile wird hiermit noch einmal verwiesen.

Die Sicherheit eines erfindungsgemäßen Verfahrens kann weiter erhöht werden, wenn die erstmalige Übertragung einer Identity-Token-ID oder einer Transaktionsnummer (TAN) an einen Identity-Sensor nur erfolgt, nachdem diese Übertragung von einem Benutzer des Identity-Tokens freigegeben wurde. Diese Ausführungsform hat insbesondere Vorteile bei der erstmaligen Autorisierung (pairing). Zur Freigabe können an dem Identity-Token Mittel zur manuellen Freigabe der Übertragung der Identity-Token-ID vorgesehen sein, beispielsweise ein Schalter. In diesem Fall kann der Nutzer eines Identity-Tokens durch Betätigung eines solchen Schalters aktiv entscheiden, ob und falls ja, wann er die Identity-Token-ID (oder ein Synonym hierfür) zur Übertragung freigeben möchte. Vorteile entstehen in diesem Fall insbesondere im Zusammenhang mit Anmeldeverfahren, bei denen nur der Nutzer des Identity-Tokens die autorisierende Person ist (automatische Bestätigung seitens des Identity-Sensors). Wenn beispielsweise in einem Kaufhaus mit mehreren installierten Identity-Sensoren die Möglichkeit angeboten werden, dass Nutzer eines Identity-Tokens ihre Identity-Token-ID zur Erfassung deren Anwesenheit an diversen Orten freigeben, kann der durch Betätigung des Schalters eines Identity-Tokens eine entsprechende Freigabe aktiv erteilen.

Alternativ oder in Ergänzung zu dem vorstehenden beschriebenen Verfahren kann nach erstmaliger Übertragung einer Identity-Token-ID oder einer Transaktionsnummer (TAN) von einem Identity-Token an einen Identity-Sensor der Identity-Sensor den zu dieser Identity-Token-ID gehörigen Identity-Combipass-Key von einer Infrastruktur anfordern und die Übermittlung des Identity-Combipass-Keys erst und nur dann erfolgen, wenn diese Übermittlung von einem Betreiber eines Identity-Sensors autorisiert wurde. Bei dieser Ausführungsform kann eine Autorisierung (auch) durch den Betreiber eines Identity-Sensors erfolgen (manuelle Freigabe seitens des Identity-Sensors). Hat der Nutzer einer Identity-Tokens zuvor durch Betätigung eines Schalters seine Identity-Token-ID erstmalig an den Identity-Sensor übertragen, erspart er dem Betreiber eines Identity-Sensors die manuelle Eingabe der Identity-Token-ID. Die Übertragung kann dann zu einer Anfrage bei dem Betreiber des Identity-Sensors führen, ob er ein Token mit einer bestimmten Identity-Token-ID freigeben möchte, die mit einfacher Bestätigung oder Ablehnung beantwortet werden kann.

Die beiden zuletzt beschriebenen Verfahrensvarianten eignen sich sehr gut für die Übermittlung ergänzender Informationen, insbesondere an die Nutzer von Identity-Tokens. Beispielsweise können vor oder nach der manuellen Freigabe durch den Betreiber eines Identity-Sensors bzw. den Nutzer eines Identity-Tokens Nutzungsbedingungen, Datenschutzbestimmungen oder sonstige Hinweise übermittelt werden.

In einer besonders bevorzugten Ausführungsform eines erfindungsgemäßen Identity-Sensors umfasst dieser eine Verifizierungseinheit oder ist mit einer Verifizierungseinheit verknüpft, mittels welcher eine Identität, eine Anwesenheit und/oder eine Berechtigung von Identity-Token feststellbar ist. Als Verifizierungseinheit wird jede Funktionseinheit angesehen, die dazu geeignet ist, die von einem Identity-Token ermittelte Identity-Response mit der von einem Identity-Sensor ermittelten Identity-Response zu vergleichen und im Falle einer Übereinstimmung eine Identität bzw. eine Anwesenheit zu bestätigen und/oder eine Berechtigung zu erteilen.

Es ist weiter bevorzugt, wenn die Verifizierungseinheit eines erfindungsgemäßen Identity-Sensors eine Verknüpfung zu einem Datenspeicher aufweist, in welchem Identity-Combipass-Keys hinterlegbar sind. Ein derartiger Datenspeicher kann entweder Bestandteil des Identity-Sensors selbst sein oder in einem Gateway oder einer Infrastruktur angeordnet sein. In derartigen Datenspeichern können Verknüpfungen von Identity-Combipass-Keys zu Identity-Token-IDs der dazugehörigen Identity-Token sicher abgelegt und verfügbar gemacht werden. Dies hat den Vorteil, dass die Identity-Combipass-Keys selbst nicht übertragen werden müssen.

In einer weiter bevorzugten Ausführungsform eines erfindungsgemäßen Identity-Sensors weist dieser eine Verknüpfung zu einer Verwaltungseinheit auf, mittels welcher Identity-Combipass-Keys aktivierbar und deaktivierbar sind und/oder mittels welcher neue Identity-Token-Keys an Identity-Token übermittelbar sind. Diese Ausführungsform ermöglicht es, Betreibern von Identity-Sensoren Berechtigungen von Nutzern von Identity-Tokens selbständig und unabhängig von einer existierenden Datenverbindung durch Aktivieren bzw. Deaktivieren der entsprechenden Identity-Combipass-Keys zu verwalten. Ferner kann ein auf einem Identity-Token gespeicherter Schlüssel (Identity-Token-Key), beispielsweise nach einem Missbrauchsfall, geändert werden, indem ein neuer Identity-Token-Key generiert und von einem Identity-Sensor an das entsprechende Identity-Token übertragen wird. Eine aktive Handlung des Identity-Token-Nutzers ist dafür nicht erforderlich. Der Nutzer kann optional über den Wechsel des Identity-Token-Keys informiert werden.

Ein erfindungsgemäßer Identity-Sensor ist vorzugsweise Teil eines Systems, das eine Infrastruktur umfasst, die als Kommunikationsmittel des mindestens einen Identity-Sensors dient und ferner mindestens eine Schnittstelle zur manuellen Konfiguration des Identity-Sensors aufweist. Ein derartiger Sensor kann beispielsweise über ein lokales Netzwerk, ein Mobilfunknetzwerk, das Internet etc., konfiguriert werden, wobei die Infrastruktur vorzugsweise als sicheres Speichermedium für kritische Informationen genutzt werden kann.

Auf die Möglichkeit und die damit verbundenen Vorteile, in einem erfindungsgemäßen System mehrere Identity-Sensoren über ein oder mehrere Gateways miteinander zu koppeln und über die Gateways mit der Infrastruktur zu verbinden, wurde im Zusammenhang mit dem erfindungsgemäßen Verfahren bereits hingewiesen.

In einer weiteren praktischen Ausführungsform des erfindungsgemäßen Verfahrens, die mit allen vorstehend beschriebenen Ausführungsformen kombinierbar ist, wird die Gültigkeitsdauer der Zufallszahlen R_{S} und R_{T} zeitlich beschränkt, insbesondere auf weniger als 300 ms ab Eingang der Zufallszahl R_{T} beim Identity-Sensor, bevorzugt auf weniger als 200 ms ab Eingang der Zufallszahl R_{T} beim Identity-Sensor und besonders bevorzugt auf weniger als 150 ms ab Eingang der Zufallszahl R_{T} beim Identity-Sensor.

Das erfindungsgemäße System hat den Vorteil, dass es nur geringe Systemressourcen benötigen und sehr flexibel nutzbar ist. Insbesondere kann ein Identity-Token für beliebig viele Identity-Sensoren freigegeben werden, ohne dass dazu das Identity-Token verändert werden muss, auf dem Identity-Token zusätzliche Applikationen installiert werden müssen oder die Sicherheit des Systems reduziert wird. Mit anderen Worten ausgedrückt, kann ein Identity-Token eines erfindungsgemäßen Systems für beliebig viele Identity-Sensoren genutzt werden, ohne dass die Sicherheit dadurch beeinträchtigt wird. Es muss lediglich sichergestellt werden, dass jede Identity-Sensor-ID nur ein Mal vergeben wird.

Weitere praktische Ausführungsformen und Einzelheiten der Erfindung sind nachfolgend im Zusammenhang mit der Zeichnung beschrieben. Es zeigt:
- Fig. 1: ein Ablaufdiagramm eines Ausführungsbeispiels des erfindungsgemäßen Verfahrens.

In Figur 1 ist ein Ausführungsbeispiel des erfindungsgemäßen Verfahrens wiedergegeben. In dem durch die gestrichelte Linie 104 eingefassten linken Bereich 100 von Figur 1 sind Verfahrensschritte dargestellt, die auf einem Identity-Sensor ablaufen. In dem durch die gestrichelte Linie 106 eingefassten rechten Bereich 102 sind Verfahrensschritte dargestellt, die auf einem Identity-Token ablaufen. Bei dem Identity-Token kann es sich beispielsweise um einen RFID-Transponder (RFID-Tag) handeln, das als Zugangsberechtigungselement für eine Tür eingesetzt wird. Bei dem Identity-Sensor kann es sich beispielsweise um ein Lesegerät für den RFID-Transponder handeln.

In dem Identity-Token ist ein Identity-Token-Key 108 gespeichert. Der Identity-Sensor sendet in regelmäßigen Abständen eine ihm eindeutig zugeordnete Identity-Sensor-ID 110 aus, die von dem Identity-Token empfangen wird, sobald es sich in Reichweite des von dem Identity-Sensor ausgesandten Signals befindet. Der Prozess des Empfangens der Identity-Sensor-ID durch das Identity-Token ist in Figur 1 durch das Feld 112 im rechten Bereich 102 visualisiert. Durch einen Transformationsprozess 114, insbesondere durch einen Verschlüsselungsprozess und/oder eine kryptographische Signatur, wird auf der Grundlage des Identity-Token-Keys und der Identity-Sensor-ID ein sogenannter Identity-Combipass-Key 116 generiert, der für jedes Identity-Token in Abhängigkeit des eindeutig zugeordneten Identity-Token-Keys eindeutig festgelegt ist.

In dem gezeigten Ausführungsbeispiel hat der Identity-Sensor unabhängig von dem Identity-Token Zugriff auf alle Identity-Combipass-Keys 118a, 118b, 118c, die denjenigen Identity-Token zugeordnet sind, welche für den Identity-Sensor eine Zugangsberechtigung haben sollen. Der Zugriff auf die Identity-Combipass-Keys 118a, 118b, 118c kann direkt erfolgen, wenn diese in dem Identity-Sensor gespeichert sind oder indirekt, wenn die Identity-Combipass-Keys 118a, 118b, 118c in einem nicht dargestellten Gateway oder einer nicht dargestellte Infrastruktur gespeichert sind, die entfernt von dem Identity-Sensor angeordnet sein können, aber auf welche der Identity-Sensor über eine Datenverbindung Zugriff hat.

Eine von dem Identity-Token generierte Zufallszahl R_{T} 120 wird von dem Identity-Token an den Identity-Sensor übermittelt und dort als R_{T} 122 zur Weiterverarbeitung gespeichert. Daraufhin quittiert der Identity-Sensor den Erhalt der Zufallszahl R_{T} durch unmittelbares Rücksenden einer Zufallszahl R_{S} 124 die zur Weiterverarbeitung als R_{S} 126 in dem Identity-Token gespeichert wird. Die Zufallszahl R_{S} ist bereits vor Erhalt der Zufallszahl R_{T} von dem Identity-Sensor generiert und auf Vorrat als Bestätigungspaket in eine nicht dargestellte Funkschnittstelle des Identity-Sensors geladen worden. Der Austausch der Zufallszahlen R_{S} und R_{T} läuft daher innerhalb sehr kurzer Zeit ab.

Basierend auf den beiden Zufallszahlen R_{S} und R_{T} wird seitens des Identity-Tokens eine festgelegte Verknüpfung 128 vorgenommen, die einen resultierenden Wert R_{combi} ergibt. Seitens des Identity-Sensors wird die gleiche Verknüpfung 130 unabhängig davon vorgenommen, so dass auch dort der Wert R_{combi} ermittelt wird.

Seitens des Identity-Tokens wird in einem letzten Schritt basierend auf dem Wert R_{combi} und dem Identity-Combipass-Key eine Identity-Response 132 gebildet. Diese wird anschließend an den Identity-Sensor übermittelt.

Seitens des Identity-Sensors werden auf der Grundlage des eindeutigen Wertes R_{combi} und der bekannten Identity-Combipass-Keys 118a, 118b, 118c entsprechende Identity-Responses 134a, 134b, 134 c gebildet. Diese werden im Rahmen eines Vergleichs 136 mit der von dem Identity-Token ermittelten Identity-Response 132 verglichen. Stimmt eine Identity-Response 134a, 134b, 134c des Identity-Sensors mit der Identity-Response 132 des Identity-Tokens überein, gilt der Beweis der Anwesenheit des Identity-Tokens als erbracht und erfolgt eine Freigabe bzw. ein Zugriffsberechtigung. Wenn Identity-Sensor und Identity-Token Teil eines Zugangsberechtigungssystems für Türen sind, wird in diesem Fall beispielsweise eine Tür von dem Identity-Sensor freigegeben.

Zur weiteren Veranschaulichung des in Figur 1 beschriebenen Ablaufs sind nachstehend ein konkretes Programmierbeispiel mit entsprechenden Beispielwerten für die einzelnen Parameter wiedergegeben.

Verfahrensschritte, die auf dem Identity-Token ablaufen, sind nachfolgend mit dem Buchstaben T abgekürzt (z.B. T1, T2, T3 etc.). Verfahrensschritte, die auf dem Identity-Sensor ablaufen, sind mit dem Buchstaben S abgekürzt (z.B. S1, S2, S3 etc.).

An den Beispielwerten ist erkennbar, dass die Verknüpfung von R_{T} (im Beispiel als R1 angegeben) und von R_{S} (im Beispiel als R2 angegeben) durch einfaches Aneinanderreihen erfolgt ist. Es sind jeweils drei Beispiele entsprechender Verfahrensabläufe für zwei verschiedene Türen dargestellt.

Die Erfindung ist nicht auf das beschriebene Ausführungsbeispiel beschränkt, sondern sie kann im Rahmen der Ansprüche und unter Berücksichtigung der Kenntnisse des zuständigen Fachmanns variiert werden. Insbesondere wird darauf verwiesen, dass sämtliche in Verbindung mit dem erfindungsgemäßen Verfahren beschriebenen Merkmale auch auf den erfindungsgemäßen Identity-Sensor und das erfindungsgemäße System übertragbar sind. Das gleiche gilt für die Übertragung von Merkmalen, die nur in Verbindung mit dem erfindungsgemäßen Identity-Sensor oder dem erfindungsgemäßen System beschrieben sind.

### Programmierbeispiel:

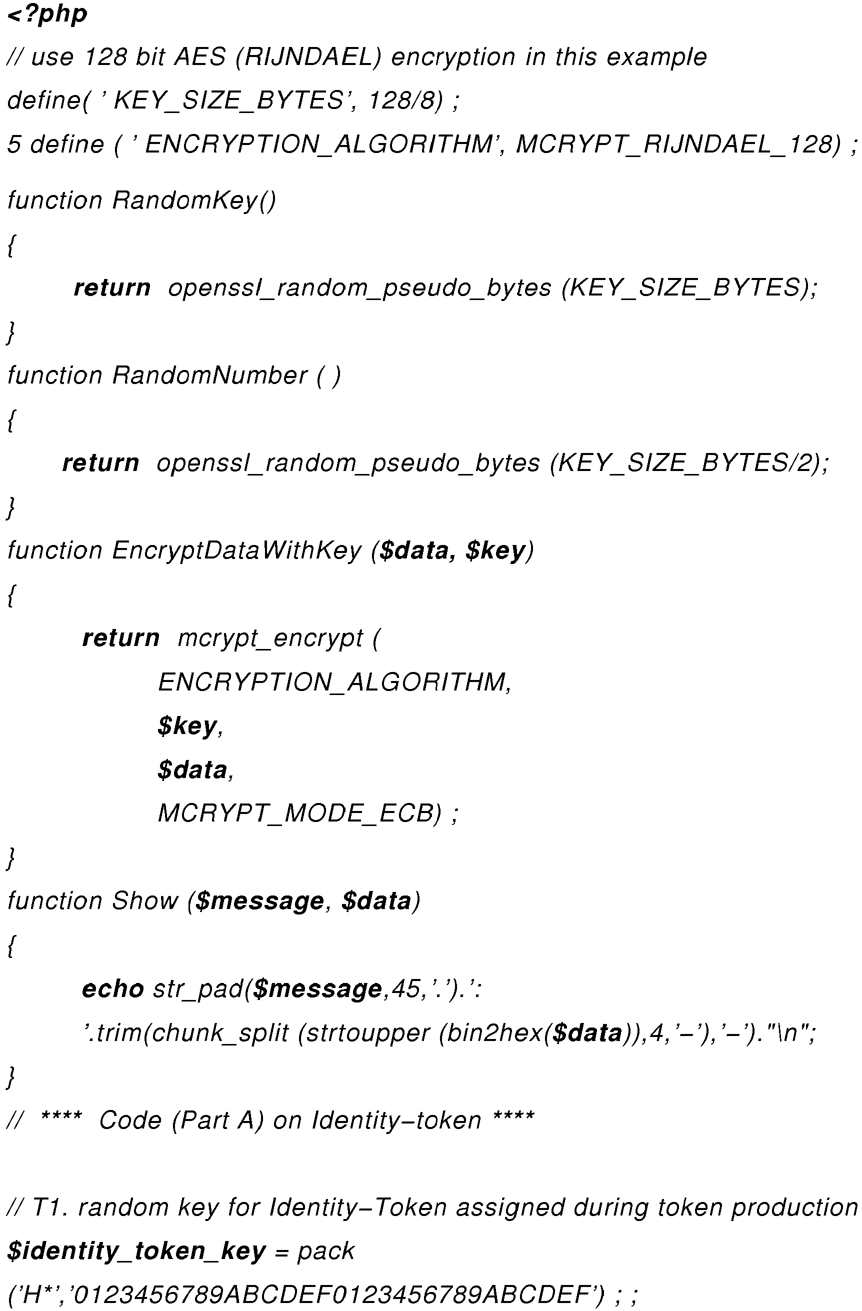

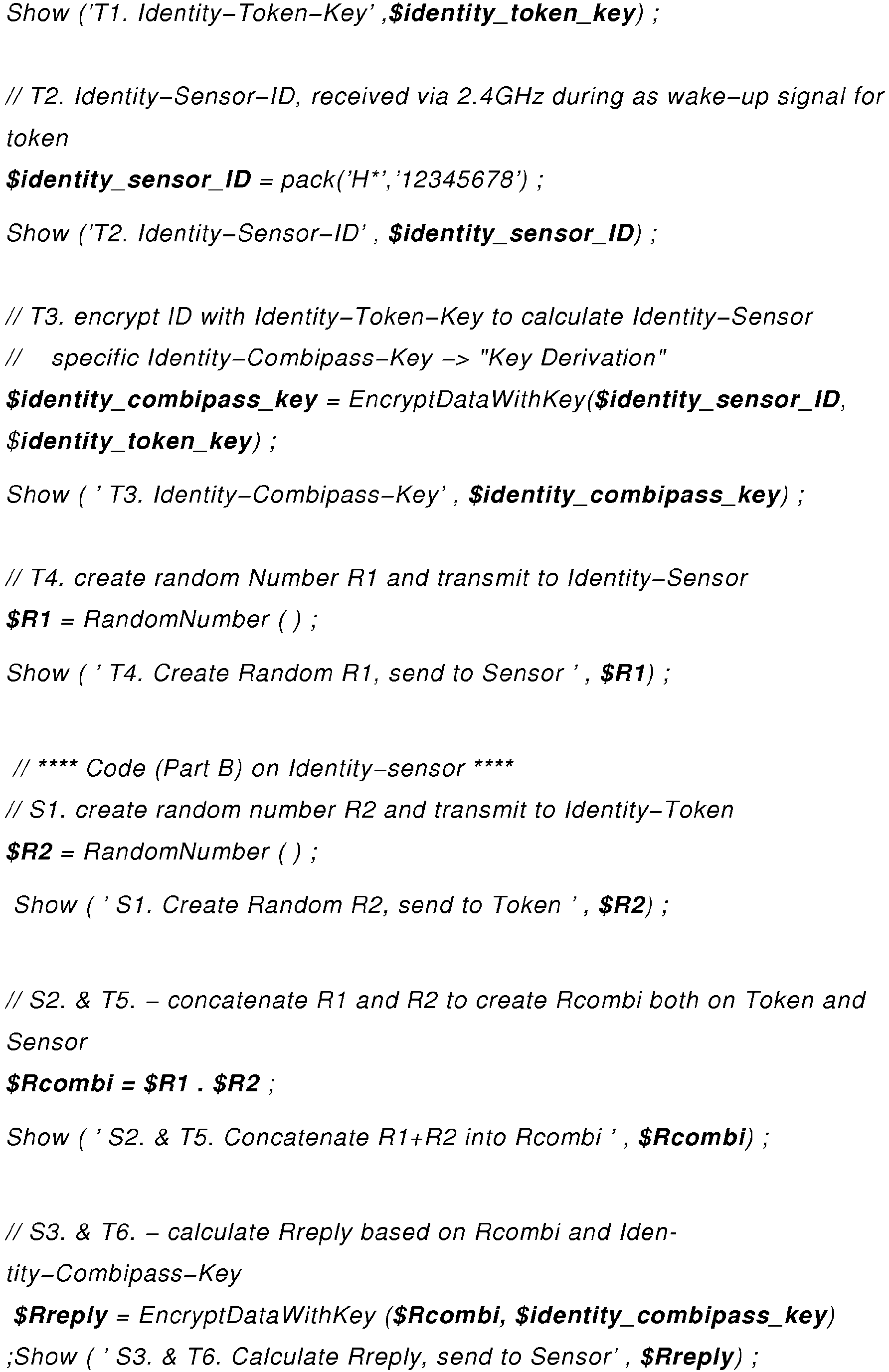

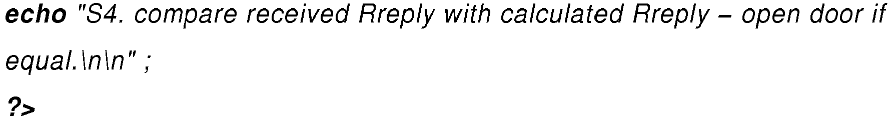

### Beispielwerte:

| *Example Door 1234-5678:* | |
|---|---|
| *T1. Identity-Token-Key* | *0123-4567-89AB-CDEF-0123-456 7-89AB-CDEF* |
| *T2. Identity-Sensor-ID* | *1234-5678* |
| *T3. Identity-Combipass-Key* | *B21C-9C8C-A741-844B-791D-57F 4-B9B8-51BB* |
| *T4. Create Random R1, send to Sensor* | *24EB-F6F1-0254-A72B* |
| *S1. Create Random R2, send to Token* | *E1CE-15F3-1B92-C6E8* |
| *S2.* & *T5. Concatenate R1+R2 into Rcombi* | *24EB-F6F1-0254-A72B-E1CE-15F 3-1B92-C6E8* |
| *S4. compare received Rreply with calculated Rreply* - *open door if equal* | |
| *T1. Identity-Token-Key* | *0123-4567-89AB-CDEF-0123-4567-89AB-CDEF* |
| *T2. Identity-Sensor-ID* | *1234-5678* |
| *T3. Identity-Combipass-Key* | *B21C-9C8C-A741-844B-791D-57F4 -B9B8-51BB* |
| *T4. Create Random R1, send to Sensor* | *5801-122D-53BE-C130* |
| *S1. Create Random R2, send to Token* | *FCEC-522D-717A-2A9E* |
| *S2.* & *T5. Concatenate R1+R2 into Rcombi* | *5801-122D-53BE-C130-FCEC-522D -717A-2A9E* |
| *S3.* & *T6. Calculate Rreply, send to Sensor* | *82D2-83A7-D162-4A60-0696-5EAB -4C3F-F152* |
| *S4. compare received Rreply with calculated Rreply* - *open door if equal.* | |
| *T1. Identity-Token-Key* | *0123-4567-89AB-CDEF-0123-456 7-89AB-CDEF* |
| *T2. Identity-Sensor-ID* | *1234-5678* |
| *T3. Identity-Combipass-Key* | *B21C-9C8C-A741-844B-791D-57 F4-B9B8-51BB* |
| *T4. Create Random R1, send to Sensor* | *2BCA-4A6B-762B-CC20* |
| *S1. Create Random R2, send to Token* | *9C2B-4950-0D17-7769* |
| *S2.* & *T5. Concatenate R1+R2 into Rcombi* | *2BCA-4A6B-762B-CC20-9C2B-49 50-0D17-7769* |
| *Example Door 0234-5678:* | |
| *S4. compare received Rreply with calculated Rreply* - *open door if equal.* | |
| *T1. Identity-Token-Key* | *0123-4567-89AB-CDEF-0123-45 67-89AB-CDEF* |
| *T2. Identity-Sensor-ID* | *0234-5678* |
| *T3. Identity-Combipass-Key* | *B07D-B7EF-5419-7557-BC5A-5 D84-42CC-8829* |
| *T4. Create Random R1, send to Sensor* | *F7A5-C05D-B364-BC84* |
| *S1. Create Random R2, send to Token* | *B77A-CF32-0A41-C9A2* |
| *S2.* & *T5. Concatenate R1+R2 into Rcombi* | *F7A5-C05D-B364-BC84-B77A-C F32-0A41-C9A2* |
| *S3.* & *T6. Calculate Rreply, send to Sensor* | *53F4-BEF3-DD68-58C4-B337-B A0E-F3A3-4EA6* |
| *S4. compare received Rreply with calculated Rreply* - *open door if equal.* | |
| *T1. Identity-Token-Key* | *0123-4567-89AB-CDEF-0123-45 67-89AB-CDEF* |
| *T2. Identity-Sensor-ID* | *0234-5678* |
| *T3. Identity-Combipass-Key* | *B07D-B7EF-5419-7557-BC5A-5D 84-42CC-8829* |
| *T4. Create Random R1, send to Sensor* | *02C6-FC55-4CD9-1FEF* |
| *S1. Create Random R2, send to Token* | *FE97-CDC7-ABAA-8A88* |
| *S2.* & *T5. Concatenate R1+R2 into Rcombi* | *02C6-FC55-4CD9-1FEF-FE97-C DC7-ABAA-8A88* |
| *S4. compare received Rreply with calculated Rreply* - *open door if equal.* | |
| *T1. Identity-Token-Key* | *0123-4567-89AB-CDEF-0123-456 7-89AB-CDEF* |
| *T2. Identity-Sensor-ID* | *0234-5678* |
| *T3. Identity-Combipass-Key* | *B07D-B7EF-5419-7557-BC5A-5D 84-42CC-8829* |
| *T4. Create Random R1, send to Sensor* | *DCCF-83D5-652D-6F91* |
| *S1. Create Random R2, send to Token* | *56EE-44D7-9E12-2DFF* |
| *S2.* & *T5. Concatenate R1+R2 into Rcombi* | *DCCF-83D5-652D-6F91-56EE-44 D7-9E12-2DFF* |
| *S3.* & *T6. Calculate Rreply, send to Sensor* | *B696-5030-8273-E471-3FC1-9B0 6-6537-A2A2* |
| *S4. compare received Rreply with calculated Rreply* - *open door if equal.* | |

### Bezugszeichenliste

- 100: linker Bereich
- 102: rechter Bereich
- 104: gestrichelte Linie
- 106: gestrichelte Linie
- 108: Identity-Token-Key
- 110: Identity-Sensor-ID (gespeichert in Identity-Sensor)
- 112: Identity-Sensor-ID (empfangen von Identity-Token)
- 114: Transformationsprozess
- 116: Identity-Combipass-Key (in Identity-Token gespeichert)
- 118: Identity-Combipass-Keys (Zugriff über Identity-Sensor)
- 120: Zufallszahl R_{T} (von Identity-Token generiert)
- 122: Zufallszahl R_{T} (von Identity-Sensor empfangen)
- 124: Zufallszahl R_{S} (von Identity-Sensor generiert)
- 126: Zufallszahl R_{S} (von Identity-Token empfangen)
- 128: Verknüpfung der Zufallszahlen R_{S} und R_{T} durch das Id.-Token
- 130: Verknüpfung der Zufallszahlen R_{S} und R_{T} durch den Id.-Sensor
- 132: Identity-Response, ermittelt durch Id.-Token
- 134: Identity-Response, ermittelt durch Id.-Sensor
- 136: Vergleich

## Patentansprüche

1. Verfahren zum kryptographisch gesicherten Beweis der Anwesenheit eines Identity-Tokens im Bereich eines Identity-Sensors und dem Austausch mindestens einer Zufallszahl R_{T} (120,122) des Identity-Tokens mit einer Zufallszahl Rs (124,126) des Identity-Sensors, gemäß welchem
a) der Identity-Sensor eine dem Identity-Sensor eindeutig zugeordnete Identity-Sensor-ID (110) an das Identity-Token überträgt und mit einem in dem Identity-Token gespeicherten Identity-Token-Key (108) durch einen Transformationsprozess ein Identity-Combipass-Key (116) gebildet wird, wobei auf dem Identity-Sensor eine Vielzahl von entsprechenden, dem Identity-Token zugeordneten Identity-Combipass-Keys (118) zur Verfügung stehen,
b) der Identity-Sensor mindestens eine Zufallszahl Rs (124) generiert und auf Vorrat als Bestätigungspaket für eine in Zukunft eingehende zweite Zufallszahl R_{T} (122) von einem Identity-Token in eine Funkschnittstelle hochlädt,
c) das Identity-Token eine Zufallszahl R_{T} (120) generiert und an den Identity-Sensor sendet und
d) daraufhin der Identity-Sensor den Empfang der Zufallszahl R_{T} (122) von dem Identity-Token durch unmittelbares Rücksenden der Zufallszahl Rs (124,126) in Form eines einzigen Datenpakets quittiert,
e) wobei die Wartezeit eines Identity-Tokens auf eine (Antwort-) Zufallszahl Rs (126) von weniger als 300 µs derart begrenzt ist, dass das Identity-Token eingehende Zufallszahlen Rs (126) nur dann berücksichtigt, wenn die Übermittlung der Zufallszahl Rs (126) innerhalb der oben genannten Wartezeit für das Identity-Token erkennbar begonnen hat,
f) wobei sowohl der Identity-Sensor als auch das Identity-Token auf der Grundlage des Identity-Combipass-Keys (116, 118) sowie der ausgetauschten Zufallszahlen Rs (124, 126) und R_{T} (120,122) unabhängig voneinander jeweils eine Identity-Response (132, 134) ermitteln, die miteinander verglichen werden, um eine Berechtigung zu überprüfen.

2. Verfahren nach dem vorstehenden Anspruch, **dadurch gekennzeichnet, dass** der Identity-Sensor so lange für zur Verfügung stehende Identity-Combipass-Keys (118) unter Berücksichtigung der Zufallszahlen Rs (124) und R_{T} (122) jeweils eine Identity-Response ermittelt (134), bis die ermittelte Identity-Response (134) mit der von dem Identity-Token ermittelten Identity-Response (132) übereinstimmt oder bis alle zur Verfügung stehenden Identity-Combipass-Keys (118) verwendet wurden.

3. Verfahren nach dem vorstehenden Anspruch, **dadurch gekennzeichnet, dass** von dem Identity-Token in Schritt a) eine Identity-Token-ID oder als Synonym für die Identity-Token ID eine zufällige Transaktionsnummer (TAN) übertragen wird und der dem Identity-Token zugeordnete Identity-Combipass-Key (116, 118) von dem Identity-Sensor auf Grundlage der Identity-Token-ID oder der Transaktionsnummer (TAN) direkt oder indirekt ermittelt wird.

4. Verfahren nach dem vorstehenden Anspruch, **dadurch gekennzeichnet, dass** die erstmalige Übertragung einer Identity-Token-ID oder einer Transaktionsnummer (TAN) an einen Identity-Sensor nur erfolgt, nachdem diese Übertragung von einem Benutzer des Identity-Tokens freigegeben wurde und/oder dass nach erstmaliger Übertragung einer Identity-Token-ID oder einer Transaktionsnummer (TAN) von einem Identity-Token an einen Identity-Sensor der Identity-Sensor den zu dieser Identity-Token-ID gehörigen Identity-Combipass-Key (116) von einer Infrastruktur anfordert und die Übermittlung des Identity-Combipass-Keys (116) erst und nur dann erfolgt, wenn diese Übermittlung von einem Benutzer autorisiert wurde.

5. Verfahren nach den Ansprüchen 1 bis 3 **dadurch gekennzeichnet, dass**
a) von dem Identity-Sensor unmittelbar nach Kenntnis der beiden Zufallszahlen Rs (124) und R_{T} (122) sämtliche Identity-Responses (134) für alle dem Identity-Sensor zur Verfügung stehenden Identity-Combipass-Keys (118) ermittelt und in einer Vergleichstabelle gespeichert werden und/oder
b) die Identity-Combipass-Keys (118) nach Nutzungshäufigkeit oder nach einer sonstigen Prioritätsrangfolge sortiert gespeichert werden und/oder
c) der zeitliche Abstand vom Austausch der Zufallszahlen Rs (124, 126) und R_{T} (120, 122) bis zur Entscheidung über die Anwesenheit eines Identity-Tokens im Bereich eines Identity-Sensors zufällig gewählt wird.

6. Identity-Sensor, umfassend eine Vorrichtung zur Datenflusssteuerung, und ausgebildet zur Realisierung eines Verfahrens zum kryptographisch gesicherten Beweis der Anwesenheit eines Identity-Tokens im Bereich eines Identity-Sensors und dem Austausch mindestens einer Zufallszahl R_{T} des Identity-Tokens mit einer Zufallszahl R_{S} des Identity-Sensors, gemäß welchem:
a) der Identity-Sensor eine dem Identity-Sensor eindeutig zugeordnete Identity-Sensor-ID an das Identity-Token überträgt und mit einem in dem Identity-Token gespeicherten Identity-Token-Key durch einen Transformationsprozess ein Identity-Combipass-Key gebildet wird, wobei auf dem Identity-Sensor eine Vielzahl von entsprechenden Identity-Token zugeordneten Identity-Combipass-Keys zur Verfügung stehen,
b) der Identity-Sensor mindestens eine Zufallszahl R_{S} generiert und auf Vorrat als Bestätigungspaket für eine in Zukunft eingehende zweite Zufallszahl R_{T} von einem Identity-Token in eine Funkschnittstelle hochlädt,
c) der Identity-Sensor eine Zufallszahl R_{T} vom Identity-Token empfängt, und
d) daraufhin der Identity-Sensor den Empfang der Zufallszahl R_{T} von dem Identity-Token durch unmittelbares Rücksenden der Zufallszahl R_{S} in Form eines einzigen Datenpakets quittiert,
f) wobei der Identity-Sensor auf der Grundlage des Identity-Combipass-Keys sowie der ausgetauschten Zufallszahlen R_{S} und R_{T} unabhängig vom Identity-Token eine Identity-Response ermittelt, und mit einer Identity-Response des Identity-Tokens vergleicht, um eine Berechtigung zu überprüfen.

7. Identity-Sensor nach dem vorstehenden Anspruch, **dadurch gekennzeichnet, dass** der Sensor eine Verifizierungseinheit umfasst oder mit einer Verifizierungseinheit verknüpft ist, mittels welcher eine Identität, eine Anwesenheit und/oder eine Berechtigung von Identity-Token feststellbar ist.

8. Identity-Sensor nach einem oder mehreren der vorstehenden Ansprüche, **dadurch gekennzeichnet, dass** die Verifizierungseinheit eine Verknüpfung zu einem Datenspeicher zur Hinterlegung von Identity-Combipass-Keys (118) aufweist.

9. Identity-Sensor nach dem vorstehenden Anspruch, **dadurch gekennzeichnet, dass** dieser eine Verknüpfung zu einer Verwaltungseinheit aufweist, mittels welcher Identity-Combipass-Keys (118) aktivierbar und deaktivierbar sind und/oder mittels welcher Identity-Token-Keys (108) an Identity-Token übermittelbar sind.

10. System mit mindestens einem vorstehend genannten Identity-Sensor, wobei das System zum Austausch von Informationen gemäß dem Verfahren nach einem der Ansprüche 1-5 ausgebildet ist , und einer Infrastruktur, die als Kommunikationsmittel des mindestens einen Identity-Sensors dient und ferner mindestens eine Schnittstelle zur manuellen Konfiguration des mindestens einen Identity-Sensors aufweist.

11. System nach dem vorstehenden Anspruch, **dadurch gekennzeichnet, dass** mehrere Identity-Sensoren über ein oder mehrere Gateways miteinander gekoppelt und über die Gateways mit der Infrastruktur verbunden sind.

## Claims

1. A method for proving the presence of an identity token in the range of an identity sensor in a cryptographically secure manner and for exchanging at least one random number R_{T} (120,122) of the identity token with a random number Rs (124,126) of the identity sensor, according to which
a) the identity sensor transmits an identity sensor ID (110) uniquely assigned to the identity sensor to the identity token and an identity combipass key (116) is formed with an identity token key (108) stored in the identity token by a transformation process, wherein a plurality of corresponding identity combipass keys (118) assigned to the identity token are provided on the identity sensor,
b) the identity sensor generates at least one random number Rs (124) and uploads said random number to a radio interface, holding the number in reserve as a confirmation packet for a second random number R_{T} (122) from an identity token arriving in the future,
c) the identity token generates a random number R_{T} (120) and sends said random number to the identity sensor, and
d) the identity sensor then acknowledges the receipt of the random number R_{T} (122) from the identity token by immediately sending back the random number Rs (124,126) in the form of a single data packet,
e) wherein the latency of an identity token for an (answer) random number Rs (126) of less than 300 µs is limited such that the identity token takes into account incoming random numbers Rs (126) only if the identity token recognises that the transmission of the random number Rs (126) has begun within the above-mentioned latency,
f) wherein, based on the identity combipass key (116, 118) and the exchanged random numbers Rs (124, 126) and R_{T} (120,122), the identity sensor and the identity token, independently of each other, each determine identity responses (132, 134) which are compared with each other for verifying a permission.

2. The method according to the preceding claim, **characterised in that** the identity sensor respectively determines (134) an identity response for available identity combipass keys (118), taking into account the random numbers Rs (124) and R_{T} (122), until the determined identity response (134) matches the identity response (132) determined by the identity token or until all available identity combipass keys (116) have been used.

3. The method according to the preceding claim, **characterised in that** an identity token ID or a random transaction number (TAN) as a synonym for the identity token ID is transmitted by the identity token in step a) and the identity combipass key (116, 118) assigned to the identity token is determined directly or indirectly by the identity sensor based on the identity token ID or the transaction number (TAN).

4. The method according to the preceding claim, **characterised in that** the initial transmission of an identity token ID or a transaction number (TAN) to an identity sensor takes place only after said transmission has been unblocked by a user of the identity token and/or **in that** the identity sensor requests the identity combipass key (116) belonging to said identity token ID from an infrastructure after an initial transmission of an identity token ID or a transaction number (TAN) from an identity token to an identity sensor and the transmission of the identity combipass key (116) takes place only if and when said transmission has been authorised by a user.

5. The method according to claims 1 to 3, **characterised in that**
a) immediately after obtaining knowledge of the two random numbers Rs (124) and R_{T} (122), the identity sensor determines all identity responses (134) for all identity combipass keys (118) available to the identity sensor and stores them in a comparison chart, and/or
b) the identity combipass keys (118) are stored sorted by the frequency of use or by another priority ranking, and/or
c) the interval between the exchange of the random numbers Rs (124, 126) and R_{T} (120, 122) and the decision on the presence of an identity token in the range of an identity sensor is chosen randomly.

6. An identity sensor comprising a data flow control device and configured for realising a method for proving the presence of an identity token in the range of an identity sensor in a cryptographically secure manner and for exchanging at least one random number R_{T} of the identity token with a random number Rs of the identity sensor, according to which:
a) the identity sensor transmits an identity sensor ID uniquely assigned to the identity sensor to the identity token and an identity combipass key is formed with an identity token key stored in the identity token by a transformation process, wherein a plurality of identity combipass keys assigned to corresponding identity tokens are provided on the identity sensor,
b) the identity sensor generates at least one random number Rs and uploads said random number to a radio interface, holding the number in reserve as a confirmation packet for a second random number R_{T} from an identity token arriving in the future,
c) the identity sensor receives a random number R_{T} from the identity token, and
d) the identity sensor then acknowledges the receipt of the random number R_{T} from the identity token by immediately sending back the random number Rs in the form of a single data packet,
f) wherein the identity sensor determines an identity response based on the identity combipass key and the exchanged random numbers Rs and R_{T} independently of the identity token and compares it with an identity response of the identity token for verifying a permission.

7. The identity sensor according to the preceding claim, **characterised in that** the sensor comprises a verification unit or is linked to a verification unit that allows to determine an identity, presence and/or permission of identity tokens.

8. The identity sensor according to one or several of the preceding claims, **characterised in that** the verification unit comprises a link to a data store for depositing identity combipass keys (118).

9. The identity sensor according to the preceding claim, **characterised in that** it comprises a link to a management unit that allows to activate and deactivate identity combipass keys (118) and/or to transfer identity token keys (108) to identity tokens.

10. A system with at least one above-mentioned identity sensor, wherein the system is configured for the exchange of information according to the method of any one of claims 1 to 5, and an infrastructure that serves as a communication means of the at least one identity sensor and, moreover, comprises at least one interface for the manual configuration of the at least one identity sensor.

11. The system according to the preceding claim, **characterised in that** several identity sensors are linked to one another via one or several gateways and linked to the infrastructure via the gateways.

## Revendications

1. Procédé de preuve sécurisée par cryptographie de la présence d'un jeton d'identité dans la zone d'un capteur d'identité et l'échange d'au moins un nombre aléatoire R_{T} (120, 122) du jeton d'identité avec un nombre aléatoire R_{S} (124, 126) du capteur d'identité, selon lequel
a) le capteur d'identité transmet au jeton d'identité un ID de capteur d'identité (110) associé de manière univoque au capteur d'identité et, avec une clé de jeton d'identité (108) stockée dans le jeton d'identité, une clé d'identité combinée (116) est formée par un processus de transformation, une pluralité de clés d'identité combinées (118) correspondantes associées au jeton d'identité étant disponibles sur le capteur d'identité,
b) le capteur d'identité génère au moins un nombre aléatoire R_{S} (124) et le charge en réserve dans une interface radio en tant que paquet de confirmation pour un deuxième nombre aléatoire R_{T} (122) à recevoir dans le futur depuis un jeton d'identité,
c) le jeton d'identité génère un nombre aléatoire R_{T} (120) et l'envoie au capteur d'identité, et
d) à la suite de quoi le capteur d'identité accuse réception depuis le jeton d'identité du nombre aléatoire R_{T} (122) en retournant immédiatement le nombre aléatoire R_{S} (124, 126) sous la forme d'un paquet de données unique,
e) dans lequel le temps d'attente d'un jeton d'identité pour un nombre aléatoire (de réponse) Rs (126) est limité à moins de 300 µs de sorte que le jeton d'identité ne prend en compte les nombres aléatoires entrants R_{S} (126) que si la transmission du nombre aléatoire R_{S} (126) a commencé de manière reconnaissable pour le jeton d'identité dans ledit temps d'attente,
f) dans lequel à la fois le capteur d'identité et le jeton d'identité déterminent indépendamment l'un de l'autre une réponse d'identité (132, 134) sur la base de la clé d'identité combinée (116, 118) et des nombres aléatoires échangés R_{S} (124, 126) et R_{T} (120, 122), qui sont comparées mutuellement pour vérifier une autorisation.

2. Procédé selon la revendication précédente, **caractérisé en ce que** le capteur d'identité détermine une réponse d'identité (134) pour chaque clé d'identité combinée (118) disponible en tenant compte des nombres aléatoires Rs (124) et R_{T} (122) jusqu'à ce que la réponse d'identité (134) déterminée corresponde à la réponse d'identité (132) déterminée par le jeton d'identité ou jusqu'à ce que toutes les clés d'identité combinées (118) disponibles aient été utilisées.

3. Procédé selon la revendication précédente, **caractérisé en ce qu'**un ID de jeton d'identité ou, en tant que synonyme de l'ID de jeton d'identité, un numéro de transaction aléatoire (TAN) est transmis depuis le jeton d'identité à l'étape a), et la clé d'identité combinée (116, 118) associée au jeton d'identité est déterminée directement ou indirectement par le capteur d'identité sur la base de l'ID de jeton d'identité ou du numéro de transaction (TAN).

4. Procédé selon la revendication précédente, **caractérisé en ce que** la transmission initiale d'un ID de jeton d'identité ou d'un numéro de transaction (TAN) à un capteur d'identité n'a lieu qu'après que cette transmission a été libérée par un utilisateur du jeton d'identité et/ou qu'après transmission initiale d'un ID de jeton d'identité ou d'un numéro de transaction (TAN) d'un jeton d'identité à un capteur d'identité, le capteur d'identité demande la clé combinée d'identité (116) associée à cet ID de jeton d'identité à une infrastructure, et la transmission de la clé d'identité combinée (116) n'aura lieu que si cette transmission a été autorisée par un utilisateur.

5. Procédé selon les revendications 1 à 3, **caractérisé en ce que**
a) toutes les réponses d'identité (134) pour toutes les clés d'identité combinées (118) à la disposition du capteur d'identité sont déterminées par le capteur d'identité immédiatement après la connaissance des deux nombres aléatoires R_{S} (124) et R_{T} (122) et stockées dans une table de comparaison et/ou
b) les clés d'identité combinées (118) sont stockées triées selon la fréquence d'utilisation ou selon un autre ordre de priorité, et/ou
c) l'intervalle de temps entre l'échange des nombres aléatoires R_{S} (124, 126) et R_{T} (120, 122) et la décision sur la présence d'un jeton d'identité dans la zone d'un capteur d'identité est choisi au hasard.

6. Capteur d'identité, comprenant un dispositif de commande de flux de données, et configuré pour mettre en œuvre un procédé de preuve sécurisée par cryptographie de la présence d'un jeton d'identité dans la zone d'un capteur d'identité et l'échange d'au moins un nombre aléatoire R_{T} du jeton d'identité avec un numéro aléatoire R_{S} du capteur d'identité, selon lequel :
a) le capteur d'identité transmet au jeton d'identité un ID de capteur d'identité associé de manière univoque au capteur d'identité et, avec une clé de jeton d'identité stockée dans le jeton d'identité, une clé d'identité combinée est formée par un processus de transformation, une pluralité de clés d'identité combinées correspondantes associées au jeton d'identité étant disponibles sur le capteur d'identité,
b) le capteur d'identité génère au moins un nombre aléatoire R_{S} et le charge en réserve dans une interface radio en tant que paquet de confirmation pour un deuxième nombre aléatoire R_{T} à recevoir dans le futur depuis un jeton d'identité,
c) le capteur d'identité reçoit un nombre aléatoire R_{T} depuis le jeton d'identité, et
d) à la suite de quoi le capteur d'identité accuse réception depuis le jeton d'identité du nombre aléatoire R_{T} en retournant immédiatement le nombre aléatoire R_{S} sous la forme d'un paquet de données unique,
f) dans lequel le capteur d'identité, sur la base de la clé combinée d'identité et des nombres aléatoires échangés R_{S} et R_{T}, détermine une réponse d'identité indépendamment du jeton d'identité et la compare avec une réponse d'identité du jeton d'identité afin de vérifier une autorisation.

7. Capteur d'identité selon la revendication précédente, **caractérisé en ce que** le capteur comprend une unité de vérification ou est relié à une unité de vérification, au moyen de laquelle une identité, une présence et/ou une autorisation de jetons d'identité peuvent être déterminées.

8. Capteur d'identité selon une ou plusieurs des revendications précédentes, **caractérisé en ce que** l'unité de vérification a une liaison vers une mémoire de données pour le stockage de clés d'identification combinées (118).

9. Capteur d'identité selon la revendication précédente, **caractérisé en ce qu'**il présente un lien vers une unité de gestion, au moyen de laquelle des clés combinées d'identité (118) peuvent être activées et désactivées et/ou au moyen de laquelle des clés de jeton d'identité (108) peuvent être transmises à des jetons d'identité.

10. Système avec au moins un dit capteur d'identité, dans lequel le système d'échange d'informations est conçu selon le procédé selon l'une des revendications 1 à 5, et présente une infrastructure qui sert de moyen de communication du au moins un capteur d'identité et également au moins une interface pour une configuration manuelle du au moins un capteur d'identité.

11. Système selon la revendication précédente, **caractérisé en ce que** plusieurs capteurs d'identité sont couplés entre eux via une ou plusieurs passerelles et sont connectés à l'infrastructure via les passerelles.
